# EUROPEAN PATENT APPLICATION

(11) **EP 2 039 247 A1**
(43) Date of publication of application: **25.03.2009**
(21) Application number: 07117000.5
(22) Date of filing: 21.09.2007
(51) Int. Cl.: A01K 87/00

(54) **Fishing rod and method for making the same**

(71) Applicant: Lee, Wen-Hsiang, Dadu Shiang Taichung County (TW)
(72) Inventor: Lee, Wen-Hsiang, Dadu Shiang Taichung County (TW)
(74) Representative: Finnie, Peter John

(57) **Abstract**

A fishing rod (100) includes a longitudinal tube body (10), a vibration sensing unit (20) including at least one elongated vibration sensing element (21) mounted longitudinally on the tube body (10), and a butt guide (30) mounted on the tube body (10) and adapted to guide a fishing string. The butt guide (30) is disposed over the vibration sensing element (21) to transfer vibration movements of the fishing string to the vibration sensing element (21). A method for making the fishing rod (100) is also disclosed.

## Description

The invention relates to a fishing rod, more particularly to a fishing rod having an improved vibration sensing capability to sense a strike. The invention also relates to a method for making the fishing rod.

A conventional fishing rod includes a series of tapered hollow tubular sections made from blanks of fiber reinforced synthetic resin. Reel seats, grips, line guides, and tips are mounted on the rod blanks to make a finished fishing rod.

When fishing, it is usual that a vibration is generated on a fishing rod by a strike. However, it is frequent that the vibration is too small to be able to sense the strike. Conventionally, the strike is judged by the movement of a float. A fisherman can therefore not be quick and precise in action in response to the strike, thus failing to obtain a good result.

Therefore, the object of the present invention is to provide a fishing rod having an improved vibration sensing capability to sense a strike.

In one aspect of this invention, a fishing rod includes a longitudinal tube body, a vibration sensing unit including at least one elongated vibration sensing element mounted longitudinally on the tube body, and a butt guide mounted on the tube body and adapted to guide a fishing string. The butt guide is disposed over the vibration sensing element to transfer vibration movements of the fishing string to the vibration sensing element.

In another aspect of this invention, a method for making a fishing rod includes the steps of:
A) winding a resin-impregnated composite sheet around a longitudinal mandrel to form a longitudinal tube body;
B) placing a vibration sensing element on the tube body along a longitudinal direction of the tube body;
C) positioning the vibration sensing element to the tube body;
D) heating the vibration sensing element and the tube body to cure the tube body and to bond the vibration sensing element to the tube body; and
E) removing the tube body from the mandrel after curing.

Other features and advantages of the present invention will become apparent in the following detailed description of the preferred embodiments with reference to the accompanying drawings, of which:
Figure 1 is a fragmentary sectional view of a preferred embodiment of a fishing rod according to this invention;
Figure 2 is another sectional view of the preferred embodiment taken along line II-II of Figure 1; and
Figures 3 to 9 are different views showing consecutive steps of a preferred embodiment of a method for making a fishing rod.

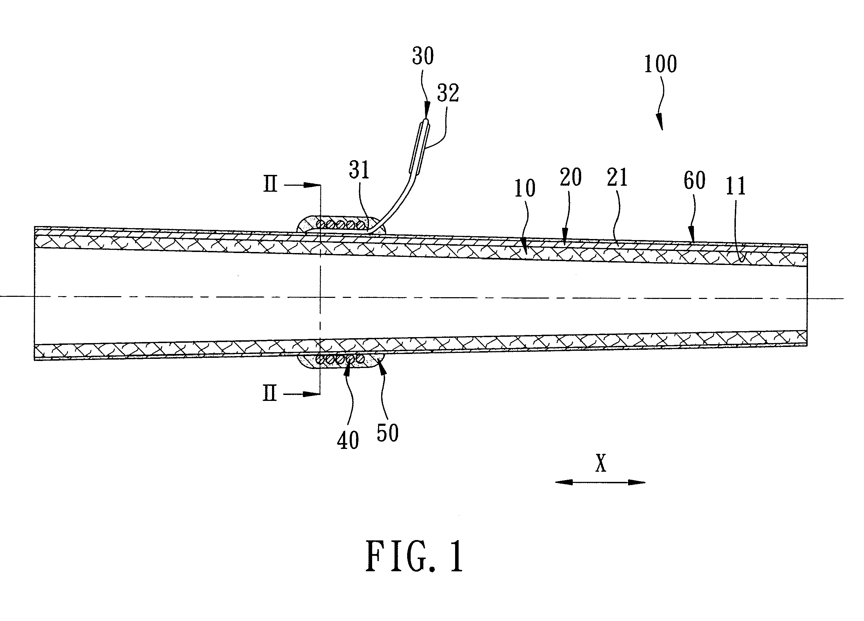

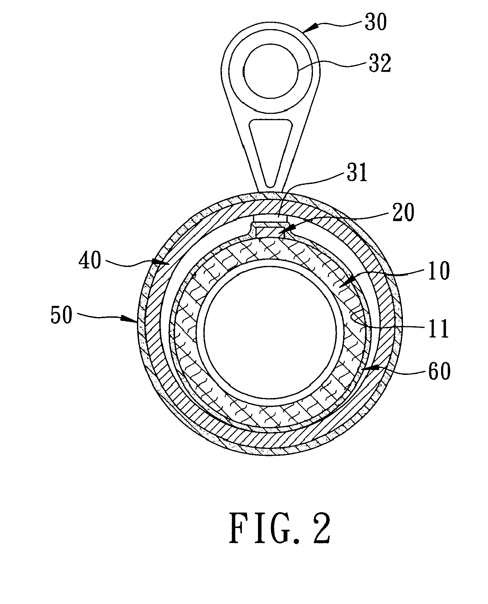

Referring to Figures 1 and 2, the preferred embodiment of a fishing rod 100 according to this invention is shown to include a longitudinal tube body 10, a vibration sensing unit 20 mounted longitudinally on the tube body 10, an outer coating layer 60, a butt guide 30 mounted on the tube body 10 and adapted to guide a fishing string (not shown), a tying wire 40, and a protective coating 50 disposed around the tying wire 40.

The longitudinal tube body 10 is made of a resin-impregnated sheet of carbon-fiber or glass-fiber composite, extends along a longitudinal direction (X), and has an outer surface 11.

The vibration sensing unit 20 includes an elongate vibration sensing element 21 mounted longitudinally on the outer surface 11 of the tube body 10. Additionally, the vibration sensing unit 20 can include a plurality of the vibration sensing elements 21 transversely spaced apart from each other. The vibration sensing element 21 is made of a material having high density and sensibility. The material useful as the vibration sensing element 21 is a carbon strip, a carbon wire, a metal strip, a metal wire, or the like.

The outer coating layer 60 is disposed around and contacts the tube body 10 and the vibration sensing element 21.

The butt guide 30 is disposed over the vibration sensing element 21 to transfer vibration movements of the fishing string to the vibration sensing element 21. The butt guide 30 includes a seat portion 31 contacting a portion of the outer coating layer 60 that contacts the vibration sensing element 21, and a guide ring 32 extending outwardly from the seat portion 31. The vibration sensing element 21 extends between the seat portion 31 of the butt guide 30 and the outer coating layer 60.

The tying wire 40 is wound around the tube body 10 to tie the seat portion 31 of the butt guide 30 to the tube body 10. In the preferred embodiment, the tying wire 40 is made of cotton.

The protective coating 50 is made of an epoxy resin, and is used to prevent loosening or rotting of the tying wire 40.

The vibration movements of the fishing string resulted from the strike of a fish can be transferred to a hand of a fisherman via the butt guide 30 and the vibration sensing element 21. Therefore, the vibration sensing capability to sense a strike can be improved.

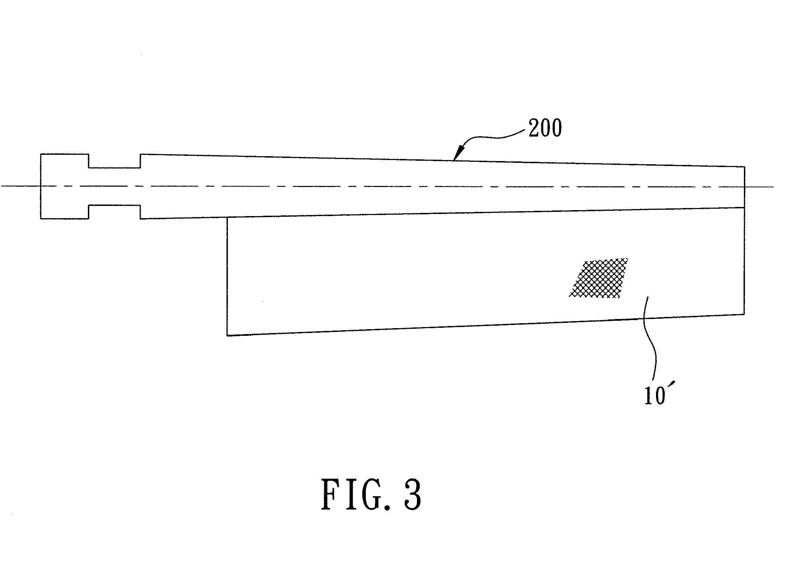

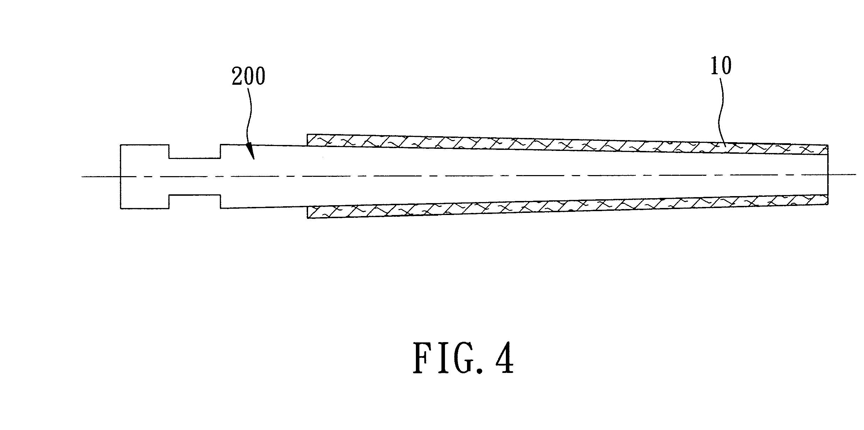

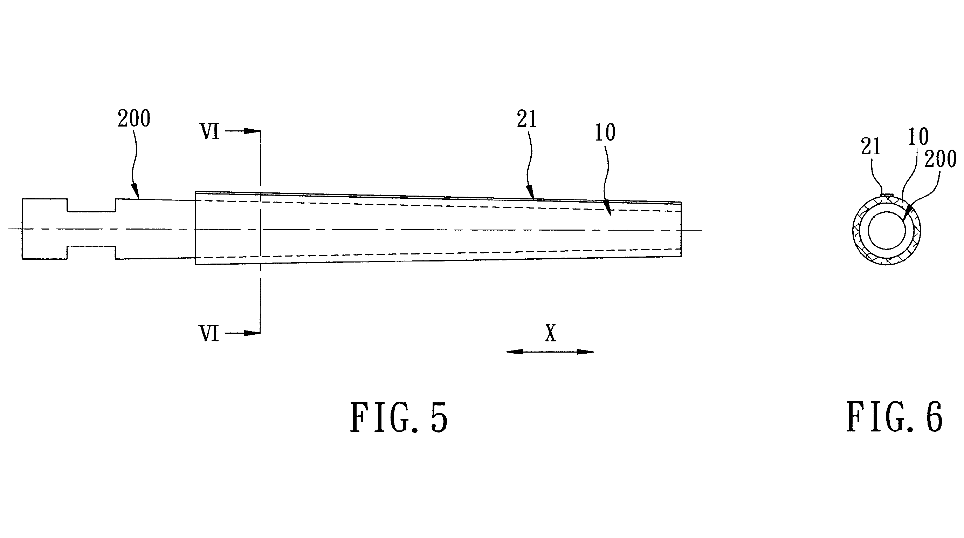

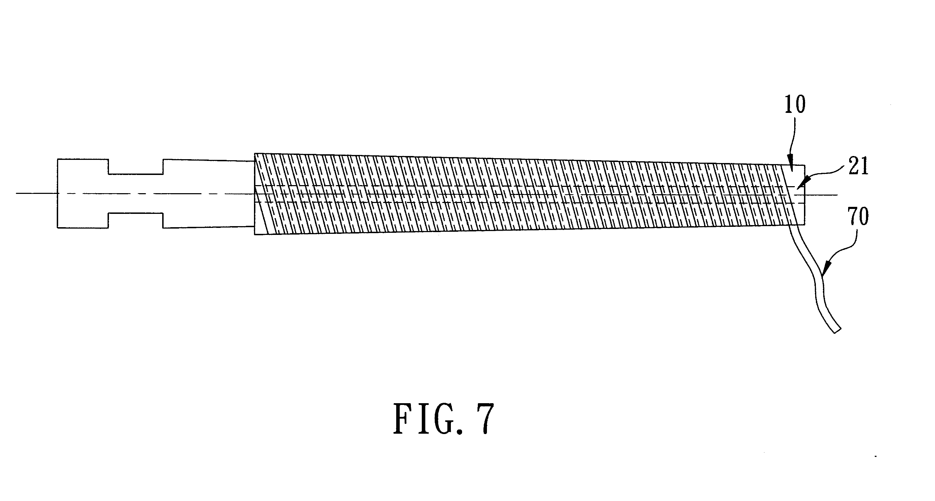

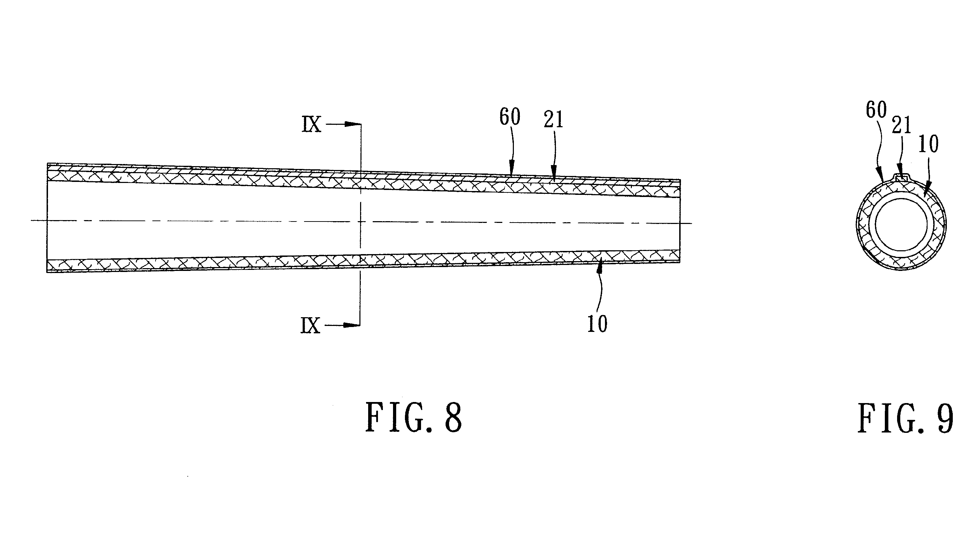

Referring to Figures 1 and 3 to 9, the preferred embodiment of a method for making the fishing rod 100 includes the steps of:
A) winding a resin-impregnated composite sheet:
   Specifically referring to Figures 3 and 4, the resin-impregnated composite sheet 10' is wound around a longitudinal mandrel 200 to form a longitudinal tube body 10.
B) placing a vibration sensing element:
   Specifically referring to Figures 5 and 6, the vibration sensing element 21 is placed on the tube body 10 along the longitudinal direction (X) of the tube body 10.
C) positioning the vibration sensing element:
   Specifically referring to Figure 7, the vibration sensing element 21 is positioned to the tube body 10 by winding helically a polymeric strip 70 around the vibration sensing element 21 and the tube body 10.
D) heating the vibration sensing element and the tube body:
   The vibration sensing element 21 and the tube body 10 are heated at a temperature ranging from 120 to 150 °C, preferably from 130 to 140°C, to cure the tube body 10 and to bond the vibration sensing element 21 to the tube body 10.
E) removing the tube body from the mandrel:
   The tube body 10 is removed from the mandrel 200 after curing. The polymeric strip 70 is then removed from the tube body 10.
F) providing an outer coating layer:
   Specifically referring to Figures 8 and 9, the outer coating layer 60 in contact with the tube body 10 and the vibration sensing element 21 is provided so as to improve aesthetic appearance of the tube body 10.
G) tying a butt guide:
   Specifically referring to Figure 1, the butt guide 30 is placed over the outer coating layer 60 at a portion which contacts the vibration sensing element 21, and is tied on the tube body 10 using the tying wire 40 to wind around the seat portion 31 of the butt guide 30 and the tube body 10 so that the seat portion 31 of the butt guide 30 makes contact with a portion of the outer coating layer 60 that contacts the vibration sensing element 21.
H) applying a protective coating:
   The protective coating 50 is applied on the tying wire 40.
I) baking the protective coating:
   The protective coating 50 is baked at a temperature ranging from 50 to 85 °C.

## Claims

1. A fishing rod (100), **characterized by**:
a longitudinal tube body (10);
a vibration sensing unit (20) including at least one elongated vibration sensing element (21) mounted longitudinally on said tube body (10); and
a butt guide (30) mounted on said tube body (10) and adapted to guide a fishing string, said butt guide (30) being disposed over said vibration sensing element (21) to transfer vibration movements of the fishing string to said vibration sensing element (21).

2. The fishing rod (100) as claimed in Claim 1, **characterized in that** said vibration sensing unit (20) includes a plurality of said vibration sensing elements (21) transversely spaced apart from each other.

3. The fishing rod (100) as claimed in Claim 1, **characterized in that** said vibration sensing element (21) is made of a material selected from the group consisting of a carbon strip, a carbon wire, a metal strip and a metal wire.

4. The fishing rod (100) as claimed in Claim 3, further **characterized by** an outer coating layer (60) disposed around and contacting said tube body (10) and said vibration sensing element (21).

5. The fishing rod (100) as claimed in Claim 4, **characterized in that** said butt guide (30) includes a seat portion (31) contacting a portion of said outer coating layer (60) that contacts said vibration sensing element (21), and a guide ring (32) extending outwardly from said seat portion (31), said vibration sensing element (21) extending between said seat portion (31) of said butt guide (30) and said outer coating layer (60).

6. The fishing rod (100) as claimed in Claim 5, further **characterized by** a tying wire (40) wound around said tube body (10) to tie said seat portion (31) of said butt guide (30) to said tube body (10), and a protective coating (50) disposed around said tying wire (40).

7. The fishing rod (100) as claimed in Claim 6, **characterized in that** said protective coating (50) is made of an epoxy resin.

8. A method for making a fishing rod (100), **characterized by** the steps of:
A) winding a resin-impregnated composite sheet (10') around a longitudinal mandrel (200) to form a longitudinal tube body (10);
B) placing a vibration sensing element (21) on the tube body (10) along a longitudinal direction (X) of the tube body (10);
C) positioning the vibration sensing element (21) to the tube body (10);
D) heating the vibration sensing element (21) and the tube body (10) to cure the tube body (10) and to bond the vibration sensing element (21) to the tube body (10); and
E) removing the tube body (10) from the mandrel (200) after curing.

9. The method as claimed in Claim 8, **characterized in that** the step C) is conducted by winding helically a polymeric strip (70) around the vibration sensing element (21) and the tube body (10), the polymeric strip (70) being removed from the tube body (10) after the step E).

10. The method as claimed in Claim 9, further **characterized by** a step of providing an outer coating layer (60) in contact with the tube body (10) and the vibration sensing element (21).

11. The method as claimed in Claim 10, further **characterized by** a step of tying a butt guide (30) on the tube body (10) and contacting a seat portion (31) of the butt guide (31) with a portion of the outer coating layer (60) that contacts the vibration sensing element (21).

12. The method as claimed in Claim 11, **characterized in that** a wire (40) is wound around the seat portion (31) of the butt guide (30) and the tube body (10) to tie the butt guide (30).

13. The method as claimed in Claim 12, further **characterized by** a step of applying a protective coating (50) on the wound wire (40).

14. The method as claimed in Claim 13, further **characterized by** a step of baking the protective coating (50).

15. The method as claimed in Claim 14, **characterized in that** the baking step is conducted at a temperature ranging from 50 to 85 °C.

16. The method as claimed in Claim 8, **characterized in that** the step D) is conducted at a temperature ranging from 120 to 150 °C.
